# EUROPEAN PATENT SPECIFICATION

(11) **EP 3 576 235 B1**
(45) Date of publication and mention of the grant of the patent: **21.04.2021**
(21) Application number: 17894478.1
(22) Date of filing: 27.01.2017
(51) Int. Cl.: H02B 11/133, H02B 1/36

(54) **FUNCTION UNIT INTERLOCK MECHANISM**
VERRIEGELUNGSMECHANISMUS FÜR FUNKTIONSEINHEIT
MÉCANISME DE VERROUILLAGE D'UNITÉ FONCTIONNELLE

(43) Date of publication of application: 04.12.2019
(73) Proprietor: Mitsubishi Electric Corporation, Chiyoda-ku Tokyo 100-8310 (JP)
(72) Inventor: SAGAWA, Tomoyuki, Tokyo 100-8310 (JP)
(74) Representative: Witte, Weller & Partner Patentanwälte mbB
(86) International application number: PCT/JP2017/002996
(87) International publication number: WO 2018/138881

(56) References cited:
- EP-B1- 2 135 336
- WO-A1-2016/157989
- DE-A1- 19 948 697
- JP-A- S6 485 506
- JP-A- S61 269 604
- JP-B1- S 284 573
- JP-U- S5 258 433
- KR-B1- 101 194 385
- US-A- 2 921 998

## Description

### TECHNICAL FIELD

The present invention relates to interlock mechanisms of functional units and, more particularly, relates to an interlock mechanism suitable for an operation handle mechanism of a wiring circuit breaker which is for safely putting in and out a functional unit in a motor control center.

### BACKGROUND ART

JEM-1195 (JEM Standards: Standards of the Japan Electrical Manufacturers' Association) provides that a functional unit of a motor control center is one circuit constituent unit of a motor control center equipped with devices of a main circuit and an auxiliary circuit which are necessary for performing a predetermined function. For the purpose of safely cutting off current during short circuit, ordinarily, a wiring circuit breaker is equipped in the functional unit. An operation handle, which has an interlock function in order that the functional unit cannot be inserted and removed when the wiring circuit breaker is in ON state, is attached to the wiring circuit breaker.

Ordinarily, the functional unit performs insertion and removal operation by means of "the principle of leverage" by a dedicated insertion and removal handle, for excessive force is needed in engaging or tripping each other's connection sections when circuit connection of the functional unit and the motor control center main body panel is contact connection.

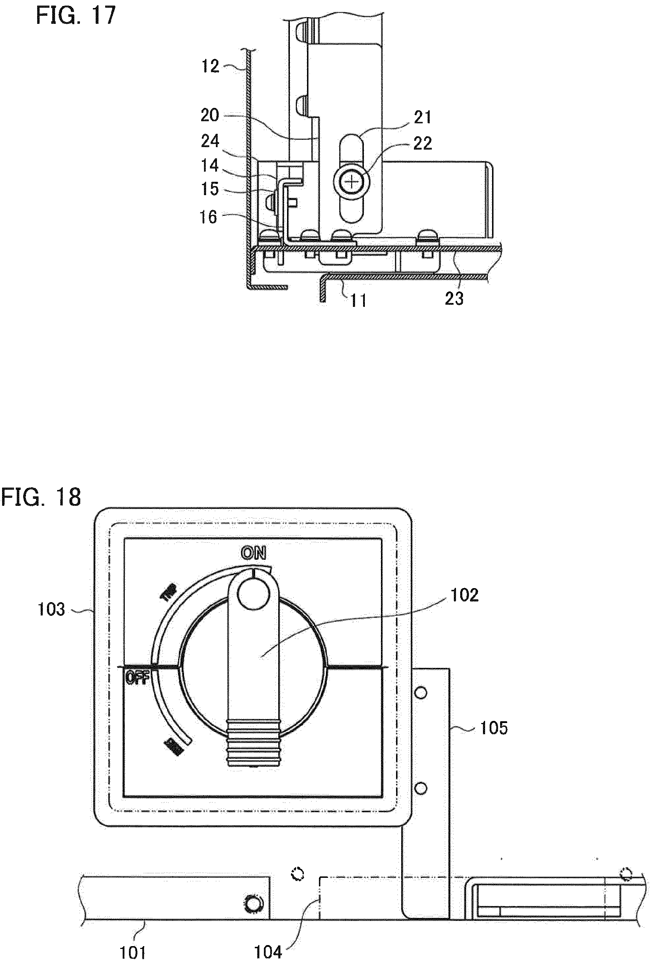

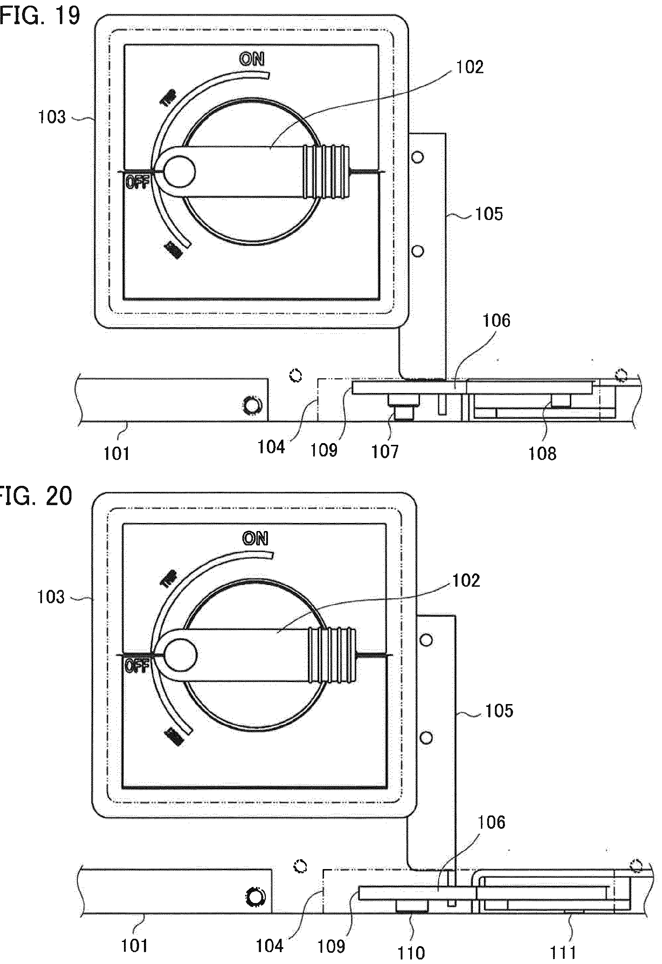

As shown in Fig. 18, a control center in International Unexamined Patent Publication No. WO 2016/157989 includes: an operation handle 102 which is for manually switching ON and OFF states of a wiring circuit breaker; an operation handle mechanism 103 having the operation handle 102; an insertion and removal handle's insertion opening 104 into which an insertion and removal handle is for being inserted; and an insertion prevention plate 105 coupled to the operation handle mechanism 103 to prevent the insertion and removal handle from being inserted into the functional unit, in a motor control center which is housed on a partition plate 101 of a functional unit housing space of a motor control center main body panel and is provided with a functional unit equipped with the wiring circuit breaker. The insertion prevention plate 105 descends so as to block a part of the insertion and removal handle's insertion opening 104 in conjunction with the operation handle mechanism 103 as shown in Fig. 18 when the wiring circuit breaker is in ON state, that is, the operation handle 102 is located at ON position, and is to prevent the insertion and removal handle from being inserted into the insertion and removal handle's insertion opening 104. When the wiring circuit breaker is in OFF state, the insertion and removal handle 106 can be inserted into the insertion and removal handle's insertion opening 104, for the insertion prevention plate 105 ascends, as shown in Fig. 19.

As shown in Fig. 19, the insertion and removal handle 106 is composed of a first projection body 107, a second projection body 108, and a flat plate 109, which fulfill the role of a fulcrum and the point of lever where force is applied. As shown in Fig. 20, the second projection body 108 is fitted into a second projection body engagement elongated hole 111 provided in an inserting and removing metal fitting of functional unit constituent components and the first projection body 107 is fitted into a first projection body engagement hole 110 provided in the partition elongated plate 101 of the functional unit housing space of the motor control center main body panel, whereby the insertion and removal handle 106 is engaged with the second projection body engagement elongated hole 111 and the first projection body engagement elongated hole 110 and it becomes a state where insertion and removal operation can be performed.

Furthermore, as shown in Fig. 21, the control center in International Unexamined Patent Publication No. WO 2016/157989is such that, in a state where the insertion and removal handle 106 is inserted in the insertion and removal handle's insertion opening 104, even if the operation handle 102 is attempted to be operated to ON position by rotating in the right direction, the insertion prevention plate 105 coupled to the operation handle mechanism 103 comes in contact with the insertion and removal handle 106 and ON operation of the wiring circuit breaker cannot be performed.

Document DE 199 48 697 A1 shows n insertable device drawer having a frame-type device carrier with separable contact lugs for the power supply to the devices, a base-plate and a guide device for the base-plate and device carrier. A locking device is provided for releasable fixture of the base-plate in the switch-bay. A threaded spindle with associated parent piece allow movement of the base-plate into an operating position and into a disconnected position. The parent piece is arranged with its frontal face on the base-plate. The locking device comprises two latching hooks arranged on opposite side-edges of the base-plate.

Document KR 101 194 385 B1 shows a unit case forming a unit of a motor control center. A case supporting plate supports the unit case. A lock controller locks and unlocks the case supporting plate lock not to move relatively. A unit case transport device relatively transports the unit case over the case supporting plate. The unit case transport device comprises a case leading piece, a drawing drum, and a drawing lever.

Document EP 2 135 336 B1 shows a module rack for an electric control panel, having a module rack housing comprising a base plate, a front side, and a rear wall. Said module rack has a separating contact system that can be displaced relative to the base plate by means of a first displacement mechanism in the insertion direction, for the displacement of separating contacts for the energy supply. The module rack has a control plug that can be displaced in a test or separating position by means of a second displacement mechanism. According to the invention a two-part actuating element, which can be actuated via the access opening by means of an actuating tool, is disposed in the module rack housing. The first part is connected to the first displacement mechanism, the second part is connected to the second displacement mechanism. Both parts can be jointly actuated via the first actuating tool. The second part can only be actuated via the second actuating tool.

### SUMMARY OF THE INVENTION

### PROBLEMS TO BE SOLVED BY THE INVENTION

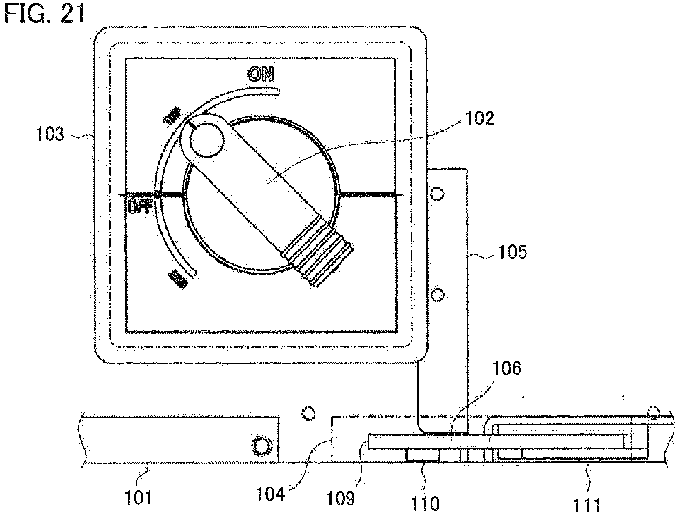

In the hitherto known control center, as shown in Fig. 19, the insertion and removal handle 106 is structured such that the first projection body 107 and the second projection body 108 project downward from the flat plate. Furthermore, as shown in Fig. 19, the insertion and removal handle 106 is inserted into the insertion and removal handle's insertion opening 104 from the front direction of the functional unit and then, the first projection body 107 needs to be fitted downward into the first projection body engagement elongated hole 110 and the second projection body 108 needs to be fitted downward into the second projection body engagement elongated hole 111. Accordingly, the insertion and removal handle 106 descends downward by an engagement margin for engagement and there generates a gap corresponding to the engagement margin between the insertion prevention plate 105 and the insertion and removal handle 106 at the time when the wiring circuit breaker is in OFF state; and thus, as shown in Fig. 21, the operation handle 102 rotates to some extent in a direction in which the wiring circuit breaker is in ON state until the insertion prevention plate 105 coupled to the operation handle mechanism 103 comes in contact with the insertion and removal handle 106 in a state where the insertion and removal handle 106 is inserted in the insertion and removal handle's insertion opening 104.

The wiring circuit breaker is likely to be in ON state in a state where the insertion and removal handle 106 is inserted in the insertion and removal handle's insertion opening 104 depending on the structure of functional units of diversion destinations; for example, a functional unit with a structure that needs to elongate the amount of vertical movement of the insertion prevention plate 105 at the time when the operation handle 102 is rotationally operated; or a functional unit other than the functional unit with the structure cited as an example in International Unexamined Patent Publication No. WO 2016/157989, for instance, it is necessary to use the insertion and removal handle with the first projection body 107 or the second projection body 108 whose vertical dimension is long; or in the case of diverting the above-mentioned interlock structure for the insertion and removal handle.

An object of the present invention is to obtain an interlock mechanism that can prevent a wiring circuit breaker from being in ON state in a state where an insertion and removal handle is inserted in an insertion and removal handle's insertion opening when an interlock mechanism of a functional unit is diverted by a functional unit with a different structure.

### MEANS FOR SOLVING THE PROBLEMS

The invention is set out in the appended set of claims.

### ADVANTAGEOUS EFFECT OF THE INVENTION

According to the present invention, in various functional units with different structures, not only a functional unit can be prevented from being inserted and removed in ON state of the wiring circuit breaker, but also the operation handle is prevented from being moved in a direction in which the wiring circuit breaker is in ON state in a state where the insertion and removal handle is inserted in the insertion and removal handle's insertion opening and the wiring circuit breaker can be reliably prevented from being in ON state.

### BRIEF DESCRIPTION OF THE DRAWINGS

Fig. 1 is a front view showing a functional unit and an interlock mechanism in Embodiment 1 not according tc the present invention;
Fig. 2 is a sectional view taken along the line Z-Z in Fig. 1;
Fig. 3 is a sectional view taken along the line Y1-Y1 in Fig. 1;
Fig. 4 is a sectional view taken along the line Y2-Y2 in Fig. 1;
Fig. 5 is a front view showing other state of the functional unit and the interlock mechanism in Embodiment 1 not according to the present invention;
Fig. 6 is a sectional view taken along the line Z-Z in Fig. 5;
Fig. 7 is a front view showing other state of the functional unit and the interlock mechanism in Embodiment 1 not according to the present invention;
Fig. 8 is a sectional view taken along the line Y1-Y1 in Fig. 7;
Fig. 9 is a sectional view taken along the line Y2-Y2 in Fig. 7;
Fig. 10 is a top view of the functional unit showing other state of the functional unit in Embodiment 1 not according to the present invention;
Fig. 11 is a sectional view taken along the line Y1-Y1 in Fig. 10;
Fig. 12 is a sectional view taken along the line Y2-Y2 in Fig. 10;
Fig. 13 is a top view of the functional unit showing other state of the functional unit in Embodiment 1 not according to the present invention;
Fig. 14 is a sectional view taken along the line Y1-Y1 in Fig. 13;
Fig. 15 is a sectional view taken along the line Y2-Y2 in Fig. 13;
Fig. 16 is a sectional view showing a left side cross section of a functional unit in Embodiment 2 according to the present invention;
Fig. 17 is a sectional view showing a right side cross section of the functional unit in Embodiment 2 according to the present invention;
Fig. 18 is a partially front view showing a part of a functional unit related to a prior art and shows a situation of an insertion and removal prevention plate and an insertion and removal handle's insertion opening when a wiring circuit breaker is in ON state;
Fig. 19 is a front view showing a part of the functional unit related to the prior art and shows a situation where the insertion and removal handle is inserted into the insertion and removal handle's insertion opening when the wiring circuit breaker is in OFF state;
Fig. 20 is a partially front view showing a situation where the insertion and removal handle is engaged with a partition plate from the state of Fig. 19; and
Fig. 21 is a front view showing a part of the functional unit related to the prior art and shows the positional relationship of an insertion and removal prevention plate and the insertion and removal handle at the time when an operation handle is operated from the state of Fig. 20.

### MODE FOR CARRYING OUT THE INVENTION

The present invention will be described with reference to drawings; and the same reference numerals as those shown in the respective drawings represent identical or corresponding elements.

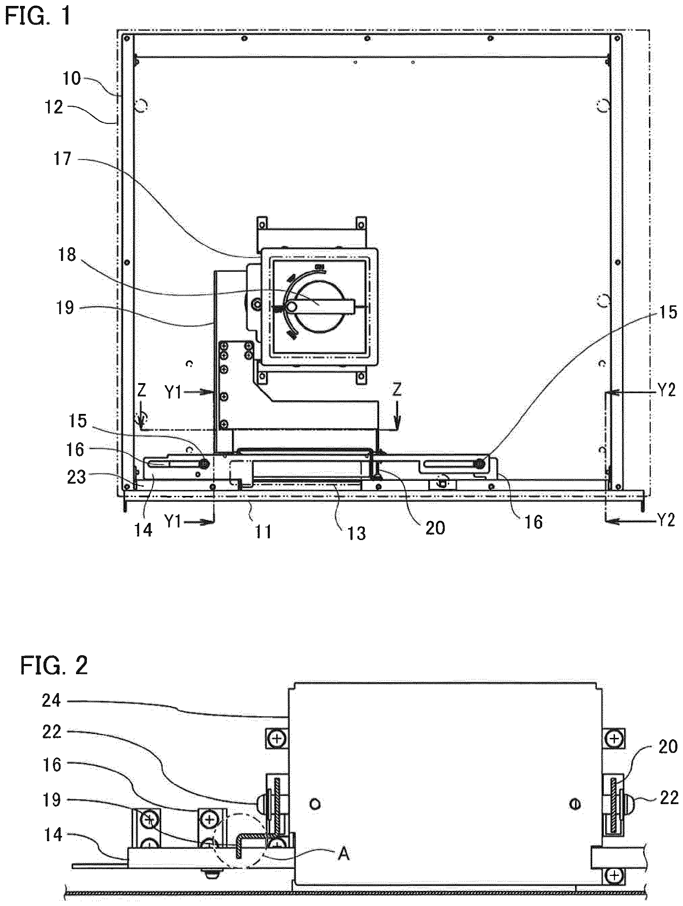

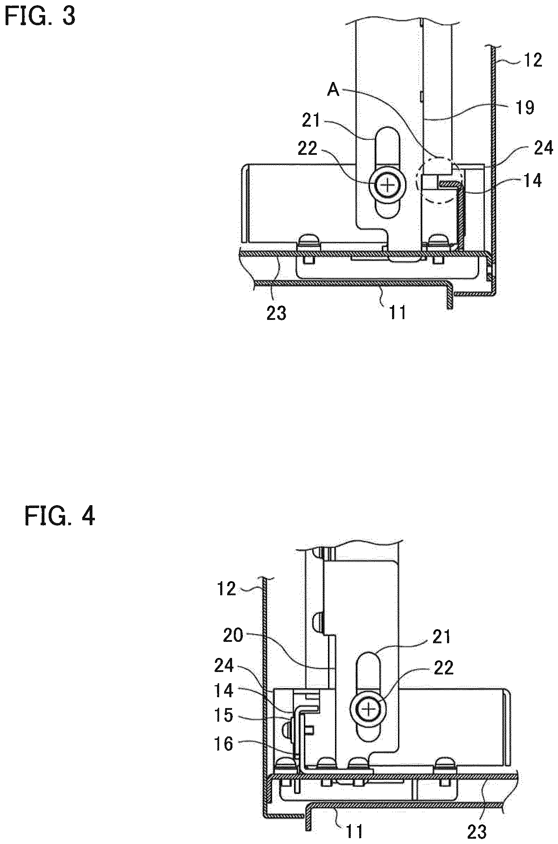

Embodiment 1, not part of the invention. Embodiment 1 will be described by using Fig. 1 to Fig. 15. Fig. 1 is a front view of a functional unit 10 which is housed on a partition plate 11 of a functional unit housing space provided in a motor control center main body panel and is equipped with a wiring circuit breaker and a functional unit interlock mechanism. Fig. 2 is a cross section taken along the line Z-Z of Fig. 1. Fig. 3 is a cross section taken along the line Y1 - Y1 of Fig. 1. Fig. 4 is a cross section taken along the line Y2-Y2 of Fig. 1.

The functional unit interlock mechanism is structured such that a left passing-block joint 19 serving as a left passing-block body and a right passing-block joint 20 serving as a right passing-block body are attached to an operation handle mechanism 17 having an operation handle 18 which is for manually switching ON and OFF states of the wiring circuit breaker. A guidance metal fitting 22 is arranged at a position passing through a guidance elongated hole 21 provided on each of the left passing-block joint 19 and the right passing-block joint 20. A front plate 12 having an insertion and removal handle's insertion opening 13 into which an insertion and removal handle is for being inserted into and removed from the functional unit 10, is attached on the front of the functional unit 10. The insertion and removal handle is accessible to the inside of the functional unit 10 from only the insertion and removal handle's insertion opening 13. An insertion and removal prevention plate 14 serving as an insertion and removal prevention body slidably operable in the front horizontal direction is supported by a supporting metal fitting 15 on the deep side of the insertion and removal handle's insertion opening 13. The supporting metal fitting 15 is fixed to a fixing metal fitting 16. The fixing metal fitting 16 is fixed to a bottom plate 23 of the functional unit 10. An insertion and removal chamber casing 24 which is for protecting the inside of the functional unit 10 from the insertion and removal handle that is to be inserted into the insertion and removal handle's insertion opening 13, is attached on the further deep side; and the guidance metal fitting 22 is attached to the insertion and removal chamber casing 24.

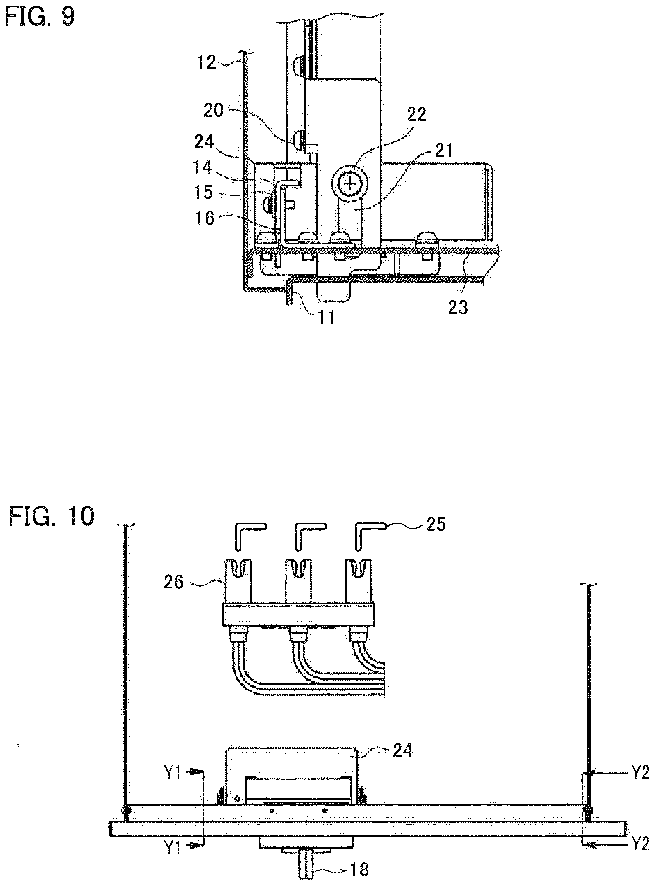

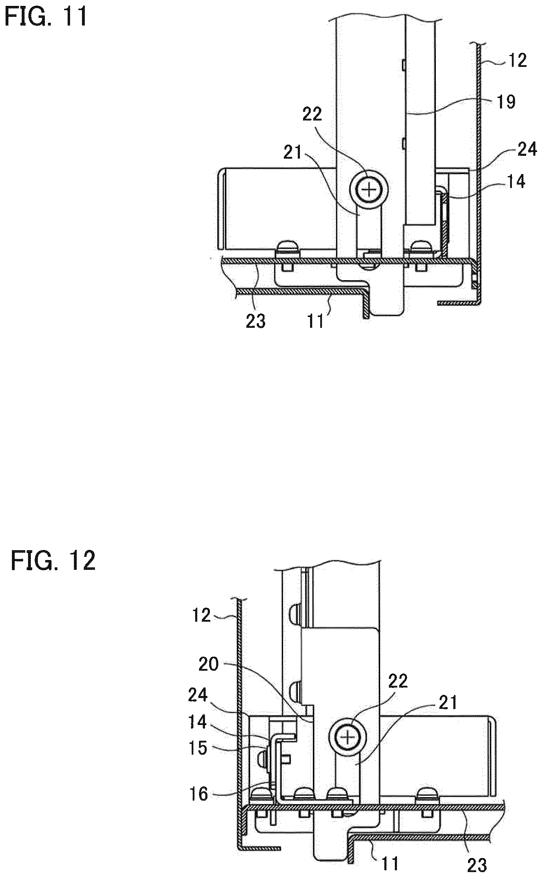

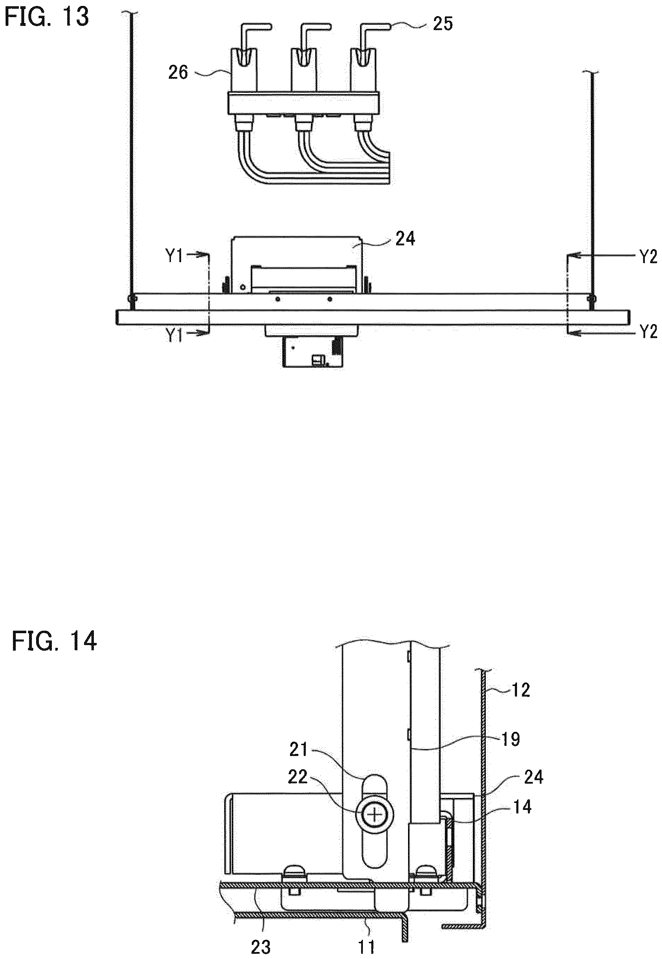

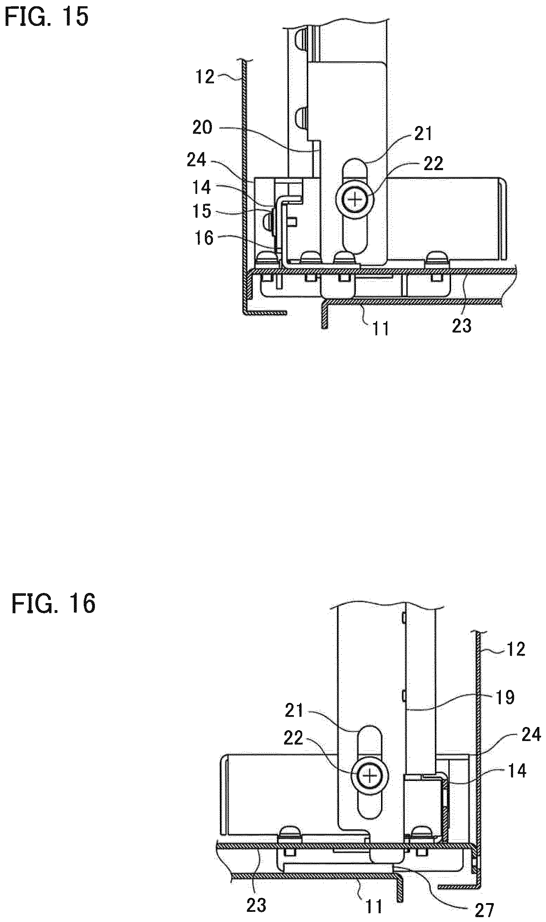

Fig. 10 is a top view of a functional unit 10 at the time when the functional unit 10 in which the wiring circuit breaker is in ON state is inserted from the outside of the control center main body panel. Fig. 11 is a sectional view taken along the line Y1-Y1 in Fig. 10. Fig. 12 is a sectional view taken along the line Y2-Y2 in Fig. 10. Fig. 13 is a top view of the functional unit in a state where the functional unit 10 is further inserted to the control center main body panel side from a stopped position of the above-mentioned insertion operation and a circuit connection section 25 on the control center main body panel side serving as the control center main body side and a circuit connection section 26 on the functional unit side are not completely engaged. Fig. 14 is a sectional view taken along the line Y1-Y1 in Fig. 13. Fig. 15 is a sectional view taken along the line Y2-Y2 of Fig. 13.

As shown in Fig. 1, in a state where the wiring circuit breaker is in OFF state and the insertion and removal prevention plate 14 is slid in the front left direction so that the insertion and removal handle's insertion opening 13 becomes an opened state, the insertion and removal prevention plate 14 is located at a position where a descending route of the left passing-block joint 19 is blocked at a contact portion A shown in Fig. 2 and Fig. 3; and accordingly, even if the operation handle 18 is attempted to be rotated so that the wiring circuit breaker is in ON state, the left passing-block joint 19 is prevented from being moved by the insertion and removal prevention plate 14 and the wiring circuit breaker cannot be in ON state. Additionally, by reducing the gap between the left passing-block joint 19 and the insertion and removal prevention plate 14 shown in the contact portion A of Fig. 3, if the operation handle 18 is attempted to be rotated, the left passing-block joint 19 immediately comes in contact with the insertion and removal prevention plate 14; and thus, the amount of rotation of the operation handle 18 at the time when the wiring circuit breaker is attempted to be in ON state in a state where the insertion and removal handle's insertion opening 13 is opened and the insertion and removal handle is capable of being inserted into the insertion and removal handle's insertion opening 13.

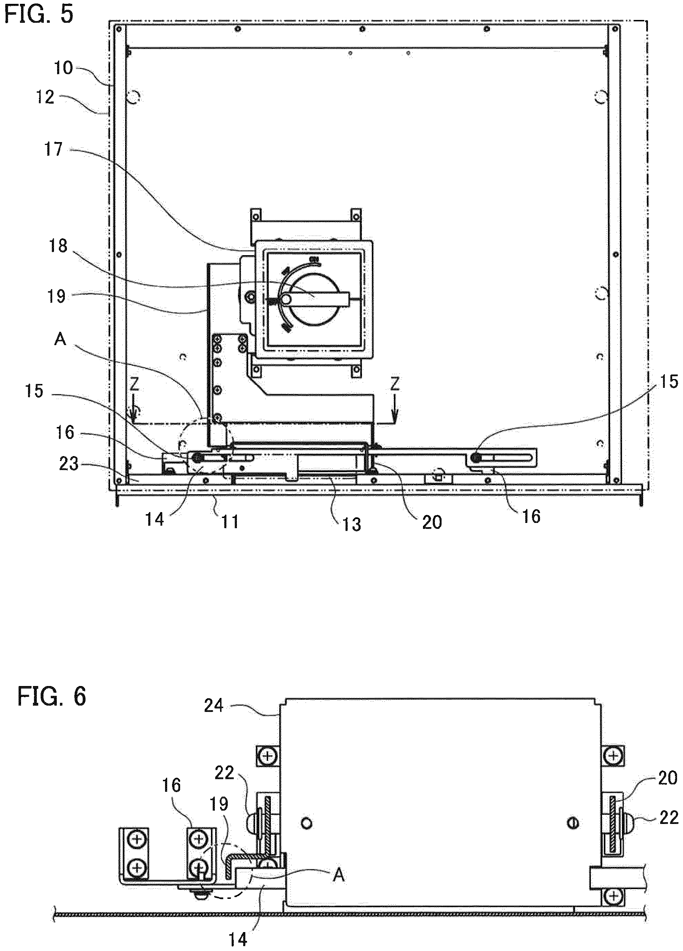

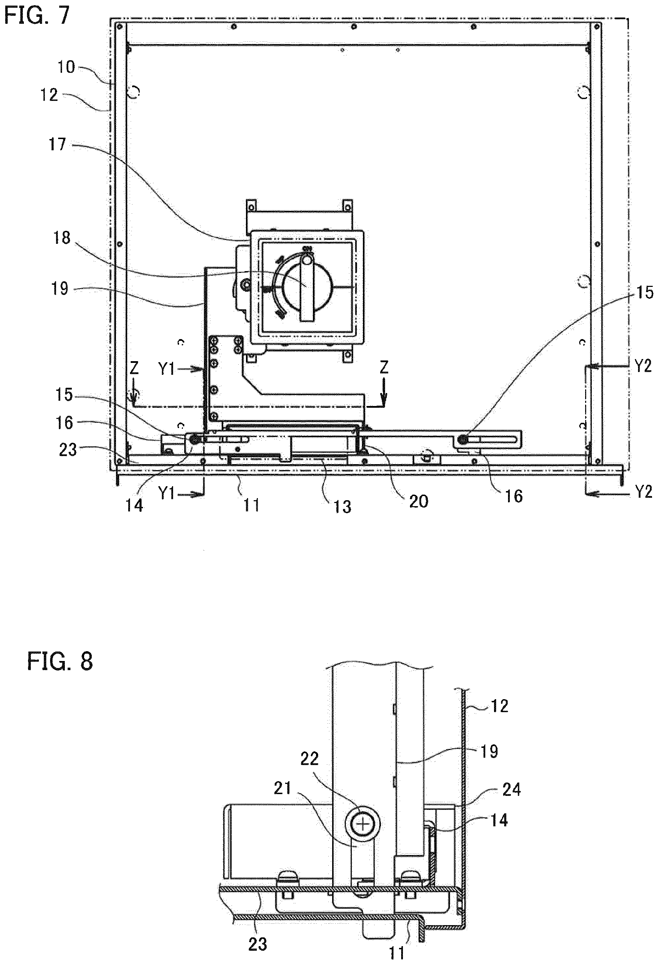

Fig. 5 is a front view of the functional unit 10 in a state where the wiring circuit breaker is in OFF state and the insertion and removal prevention plate 14 is slid in the front right direction so that the insertion and removal handle's insertion opening 13 is closed; and Fig. 6 shows a cross section taken along the line Z-Z of Fig. 5. The insertion and removal prevention plate 14 is located at a position where the descending route of the left passing-block joint 19 is avoided at a contact portion A shown in Fig. 5; and thus, a mechanism is provided such that, in this state, if the operation handle 18 is rotated in a direction where the wiring circuit breaker is from OFF state to ON state as shown in Fig. 7, Fig. 8, and Fig. 9, the left passing-block joint 19 and the right passing-block joint 20 descend and the wiring circuit breaker is in ON state.

In this state, the left passing-block joint 19 is located at a position where a sliding route of the insertion and removal prevention plate 14 is blocked and the left passing-block joint 19 and the insertion and removal prevention plate 14 are arranged so as to reduce the gap therebetween, whereby even if the insertion and removal prevention plate 14 is attempted to be slid in the front left direction so that the insertion and removal handle's insertion opening 13 is opened, the insertion and removal prevention plate 14 immediately comes in contact with the left passing-block joint 19 and the insertion and removal handle can be prevented from being inserted into the insertion and removal handle's insertion opening 13 in a state where the wiring circuit breaker is in ON state. When it is desired to remove the functional unit 10 by putting the wiring circuit breaker from ON state to OFF state, the functional unit 10 can be removed by operating in a procedure opposite to the one described above. Moreover, the left passing-block joint 19 and the right passing-block joint 20 are stably operated by the guidance metal fitting 22.

Moreover, since the insertion and removal prevention plate 14 covers more than half of the insertion and removal handle's insertion opening 13, it becomes more easily understandable than the prior art as to whether it is in an insertable and removable state or not.

As shown in Fig. 10, Fig. 11, and Fig. 12, it is structured such that when the wiring circuit breaker is in ON state and the functional unit 10 is inserted from the outside of the control center main body panel, the plate thickness surfaces of the left passing-block joint 19 and the right passing-block joint 20 come in contact with the partition plate 11 so that the distance between the circuit connection section 25 on the control center main body panel side and the circuit connection section 26 on the functional unit side is equal to or larger than a necessary electrical insulation distance, that is, so that the insertion operation of the functional unit 10 is stopped at a position that satisfies equal to or more than this electrical insulation distance.

As shown in Fig. 13, Fig. 14, and Fig. 15, it is structured such that the lower ends of the left passing-block joint 19 and the right passing-block joint 20 come in contact with the partition plate 11 and the operation handle 18 cannot be rotated after the lower ends come in contact with the partition plate 11 so that the wiring circuit breaker is not in ON state in a state where the wiring circuit breaker is in OFF state, the functional unit is further inserted to the control center main body panel side from a position where the above-mentioned insertion operation is stopped, and the circuit connection section 25 on the control center main body panel side and the circuit connection section 26 on the functional unit side are not completely engaged.

As described above, in Embodiment 1, when the wiring circuit breaker is in OFF state, the insertion and removal handle is capable of being inserted into the insertion and removal handle's insertion opening 13, the wiring circuit breaker cannot be in ON state, and the amount of rotation of the operation handle 18 at the time when the wiring circuit breaker is in ON state is suppressed. When the wiring circuit breaker is in ON state, the insertion and removal handle is prevented from being inserted into the insertion and removal handle's insertion opening 13. Furthermore, the left passing-block joint 19 and the right passing-block joint 20 are stably operated by the guidance metal fitting 22. Additionally, when the functional unit 10 is inserted from the outside of the control center main body panel in a state where the wiring circuit breaker is in ON state, the insertion operation of the functional unit 10 is stopped at the position where the distance between the circuit connection section 25 on the control center main body panel side and the circuit connection section 26 on the functional unit side is equal to or more than the necessary electrical insulation distance. In addition, the wiring circuit breaker is not in ON state in the state where the wiring circuit breaker is in OFF state, the functional unit is further inserted to the control center main body panel side from the position where the above-mentioned insertion operation is stopped, and the circuit connection section 25 on the control center main body panel side and the circuit connection section 26 on the functional unit side are not completely engaged.

Embodiment 2. Embodiment 2 of the present invention will be described by using Fig. 16 and Fig. 17. Basic configurations and operational advantages are the same as the configurations and the operational advantages in the above-described Embodiment 1; however, as shown in Fig. 16, a pad 27 is provided on a partition plate 11.

When in the state of Fig. 13, Fig. 14, and Fig. 15, as shown in Fig. 3 and Fig. 4, the left passing-block joint 19 descends by the distance between the partition plate 11 and the lower end of the left passing-block joint 19 at the time when the wiring circuit breaker is in OFF, and the right passing-block joint 20 descends by the distance between the partition plate 11 and the lower end of the right passing-block joint 20 at the time when the wiring circuit breaker is in OFF; and accordingly, the operation handle 18 rotates to some extent. As shown in Fig. 16 and Fig. 17, by providing the pad 27 below the left passing-block joint 19 or the right passing-block joint 20, the lower end of the left passing-block joint 19 or the right passing-block joint 20 comes in contact with the pad 27 at an earlier stage; and thus, the amount of rotation of an operation handle 18 can be suppressed.

As described above, in Embodiment 2, the amount of rotation of the operation handle 18 can be more suppressed as compared to the state of Fig. 14 and Fig. 15, as shown in Fig. 16 and Fig. 17.

### DESCRIPTION OF REFERENCE NUMERALS

10 Functional unit, 11 Partition plate, 13 Insertion and removal handle's insertion opening, 14 Insertion and removal prevention plate, 17 Operation handle mechanism, 18 Operation handle, 19 Left passing-block joint, 20 Right passing-block joint, 25 Circuit connection section, 26 Circuit connection section, 27 Pad

## Claims

1. A control center with a functional unit (10) being housed on a partition plate (11) of a functional unit housing space in the control center, the functional unit comprising an interlock mechanism which comprises:
an insertion and removal handle's insertion opening (13) which is provided in a functional unit (10) and into which an insertion and removal handle that inserts and removes the functional unit (10) is for being inserted, the functional unit (10) being equipped with a wiring circuit breaker; and
an insertion and removal prevention body (14) which prevents the insertion and removal handle from being inserted into the insertion and removal handle's insertion opening (13) when an operation handle mechanism (17) that turns ON and OFF the wiring circuit breaker is in ON state,
wherein the interlock mechanism of the functional unit includes a passing-block body (19, 20) which is movably provided with respect to the insertion and removal prevention body (14) in conjunction with the operation handle mechanism (17) coupled to an operation handle (18) that switches ON and OFF states of the wiring circuit breaker; and
the passing-block body (19) is prevented from being moved according to the position of the insertion and removal prevention body (14) **characterized in that**
the interlock mechanism is configured such that when the wiring circuit breaker is in ON state and the functional unit (10) is inserted from the outside of the control center, the passing-block body (19, 20) comes in contact with a side portion of the partition plate (11) of the housing space to stop the insertion operation of the functional unit (10) at a position where the distance between a circuit connection section (25) on the control center main body side and a circuit connection (26) on the functional unit (10) side is equal or larger than a necessary electrical insulation distance,
wherein the interlock mechanism is further configured such that when the wiring circuit breaker is in OFF state, the functional unit (10) can be further inserted in the control center main body panel from the position where the insertion operation is stopped, the passing-block body (19, 20) being released from movement preventing by the side portion of the partition plate (11) and being located on the upper side of the partition plate (11) of the housing space and the operating handle (18) is prevented from being moved to ON position until the circuit connection section (25) on the control center body side and the circuit connection section (26) on the functional unit side are connected, the interlock mechanism further comprising a pad (27) which is provided on the upper surface of the partition plate (11) and is arranged between the partition plate (11) and the passing-block body (19, 20).

2. The control center according to claim 1,
wherein the passing-block body (19) is prevented from being moved by coming in contact with the insertion and removal prevention body (14) with respect to the operation to the ON position direction of the operation handle (18) when the operation handle (18) is in OFF position state and the insertion and removal prevention body (14) opens the insertion and removal handle's insertion opening (13).

3. The control center according to claim 1,
wherein the passing-block body (19) is released from movement prevention by the insertion and removal prevention body (14) when the operation handle (18) is in OFF position state and the insertion and removal prevention body (14) is located at a position where the insertion and removal handle is prevented from being inserted.

4. The control center according to claim 1,
wherein the passing-block body (19) is released from movement prevention by the insertion and removal prevention body (14) when the operation handle (18) is in ON position state and the insertion and removal prevention body (14) is located at a position where the insertion and removal handle is prevented from being inserted; and
the removal prevention body (14) is movable in response to the operation to the OFF position of the operation handle (18).

## Patentansprüche

1. Steuerungszentrum mit einer Funktionseinheit (10), die auf einer Unterteilungsplatte (11) eines Funktionseinheitsbeherbungsraum in dem Steuerungszentrum beherbergt ist, wobei die Funktionseinheit einen Verschlussmechanismus aufweist, der aufweist:
eine Einfügungs- und Entfernungshandgriffeinfügungsöffnung (13), die in einer Funktionseinheit (10) vorgesehen ist und in die ein Einfügungs- und Entfernungshandgriff, der die Funktionseinheit (10) einfügt und entfernt, einzufügen ist, wobei die Funktionseinheit (10) mit einem Schaltkreisunterbrecher ausgestattet ist; und
einen Einfügungs- und Entfernungsvermeidungskörper (14), der vermeidet, dass der Einfügungs- und Entfernungshandgriff in die Einfügungs- und Entfernungshandgriffeinfügungsöffnung (13) eingefügt wird, wenn ein Betriebshandgriffmechanismus (17), der den Schaltkreisunterbrecher AN und AUS schaltet, in einem AN-Zustand ist,
wobei der Verschlussmechanismus der Funktionseinheit einen Durchlassblockkörper (19, 20) aufweist, der bewegbar in Bezug auf den Einfügungs- und Entfernungsvermeidungskörper (14) bereitgestellt ist zusammen mit dem Betriebshandgriffmechanismus (17), der mit einem Betriebshandgriff (18) gekoppelt ist, der AN- und AUS-Zustände des Schaltkreisunterbrechers schaltet; und
der Durchlassblockkörper (19) daran gehindert ist, bewegt zu werden, gemäß der Position des Einfügungs- und Entfernungsvermeidungskörpers (14), **dadurch gekennzeichnet, dass**
der Verschlussmechanismus derart konfiguriert ist, dass, wenn der Schaltkreisunterbrecher in einem AN-Zustand ist und die Funktionseinheit (10) von der Außenseite des Steuerungszentrums eingefügt ist, der Durchlassblockkörper (19, 20) in Kontakt mit einem Seitenabschnitt der Unterteilungsplatte (11) des Beherbergungsraums kommt, um den Einfügungsvorgang der Funktionseinheit (10) an einer Position zu stoppen, wo die Entfernung zwischen einem Schaltkreisverbindungsabschnitt (25) auf der Steuerungszentrumhauptkörperseite und einer Schaltkreisverbindung (26) auf der Funktionseinheit(10)-Seite gleich zu oder größer als eine notwendige elektrische Isolationsentfernung ist,
wobei der Verschlussmechanismus des Weiteren derart konfiguriert ist, dass, wenn der Schaltkreisunterbrecher in einem AUS-Zustand ist, die Funktionseinheit (10) weiter in das Steuerungszentrumshauptkörperpaneel von der Position eingefügt werden kann, wo der Einfügungsvorgang gestoppt ist, wobei der Durchlassblockkörper (19, 20) von einer Bewegungsverhinderung losgelöst wird durch den Seitenabschnitt der Unterteilungsplatte (11) und auf der oberen Seite der Unterteilungsplatte (11) des Beherbergungsraums angeordnet ist, und der Betriebshandgriff (18) daran gehindert wird, in die AN-Position bewegt zu werden, bis der Schaltkreisverbindungsabschnitt (25) auf der Steuerungszentrumskörperseite und der Schaltkreisverbindungsabschnitt (26) auf der Funktionseinheitsseite verbunden sind,
wobei der Verschlussmechanismus des Weiteren eine Unterlage (27) aufweist, die auf der oberen Fläche der Unterteilungsplatte (11) bereitgestellt ist und zwischen der Unterteilungsplatte (11) und dem Durchlassblockkörper (19, 20) angeordnet ist.

2. Steuerungszentrum nach Anspruch 1,
wobei der Durchlassblockkörper (19) daran gehindert ist, bewegt zu werden, indem er in Kontakt mit dem Einfügungs- und Entfernungsvermeidungskörper (14) in Kontakt kommt in Bezug auf den Betrieb zu der AN-Positionsrichtung des Betriebshandgriffs (18), wenn der Betriebshandgriff (18) in dem AUS-Positionszustand ist und der Einfügungs- und Entfernungsvermeidungskörper (14) die Einfügungs- und Entfernungshandgriffseinfügungsöffnung (13) öffnet.

3. Steuerungszentrum nach Anspruch 1,
wobei der Durchlassblockkörper (19) von der Bewegungsvermeidung durch den Einfügungs- und Entfernungsvermeidungskörper (14) losgelöst ist, wenn der Betriebshandgriff (18) in dem AUS-Positionszustand ist und der Einfügungs- und Entfernungsvermeidungskörper (14) an einer Position angeordnet ist, wo der Einfügungs- und Entfernungshandgriff daran gehindert ist, eingefügt zu werden.

4. Steuerungszentrum nach Anspruch 1,
wobei der Durchlassblockkörper (19) von einer Bewegungsvermeidung losgelöst ist durch den Einfügungs- und Entfernungsvermeidungskörper (14), wenn der Betriebshandgriff (18) im AN-Zustand ist und der Einfügungs- und Entfernungsvermeidungskörper (14) an einer Position angeordnet ist, wo der Einfügungs- und Entfernungshandgriff daran gehindert ist, eingefügt zu werden; und
der Einfügungs- und Entfernungsvermeidungskörper (14) bewegbar ist in Antwort auf den Betrieb des Betriebshandgriffs (18) in die AUS-Position.

## Revendications

1. Centre de contrôle avec une unité fonctionnelle (10) étant logée sur une plaque de séparation (11) d'un espace de logement d'unité fonctionnelle dans le centre de contrôle, l'unité fonctionnelle comprenant un mécanisme de verrouillage qui comprend :
une ouverture d'insertion (13) de poignée d'insertion et de retrait qui est pratiquée dans une unité fonctionnelle (10) et dans laquelle une poignée d'insertion et de retrait qui insère et retire l'unité fonctionnelle (10) est destinée à être insérée, l'unité fonctionnelle (10) étant équipée d'un disjoncteur de câblage ; et
un corps de prévention d'insertion et de retrait (14) qui empêche l'insertion de la poignée d'insertion et de retrait dans l'ouverture d'insertion de la poignée d'insertion et de retrait (13) lorsqu'un mécanisme de poignée de commande (17) qui met en marche, ON, et arrête, OFF, le disjoncteur de câblage est en état de marche, ON,
où le mécanisme de verrouillage de l'unité fonctionnelle comprend un corps de blocage de passage (19, 20) qui est disposé de manière mobile par rapport au corps d'empêchement d'insertion et de retrait (14) en liaison avec le mécanisme de poignée de commande (17) couplé à une poignée de commande (18) qui commute les états de marche, ON, et d'arrêt, OFF, du disjoncteur de câblage ; et
le corps de blocage de passage (19) est empêché d'être déplacé selon la position du corps d'empêchement d'insertion et de retrait (14), **caractérisé en ce que** le mécanisme de verrouillage est configuré de manière à ce que lorsque le disjoncteur de câblage est dans l'état ON et l'unité fonctionnelle (10) est insérée depuis l'extérieur du centre de contrôle, le corps de blocage de passage (19, 20) entre en contact avec une partie latérale de la plaque de séparation (11) de l'espace de logement pour arrêter l'opération d'insertion de l'unité fonctionnelle (10) à une position où la distance entre une section de connexion de circuit (25) du côté du corps principal du centre de contrôle et une connexion de circuit (26) du côté de l'unité fonctionnelle (10) est égale ou supérieure à une distance d'isolation électrique nécessaire,
où le mécanisme de verrouillage est en outre configuré de manière à ce que, lorsque le disjoncteur de câblage est dans l'état OFF, l'unité fonctionnelle (10) peut être davantage insérée dans le panneau du corps principal du centre de contrôle à partir de la position où l'opération d'insertion est arrêtée, le corps de blocage de passage (19, 20) étant libéré du blocage de mouvement par la partie latérale de la plaque de séparation (11) et étant situé sur le côté supérieur de la plaque de séparation (11) de l'espace de logement, et la poignée de commande (18) étant empêchée d'être déplacée en position ON jusqu'à ce que la section de connexion de circuit (25) du côté du corps du centre de contrôle et la section de connexion de circuit (26) du côté de l'unité fonctionnelle soient connectées,
le mécanisme de verrouillage comprenant en outre un tampon (27) qui est pourvu sur la surface supérieure de la plaque de séparation (11) et qui est disposé entre la plaque de séparation (11) et le corps de blocage de passage (19, 20).

2. Centre de contrôle selon la revendication 1,
dans lequel le corps de blocage de passage (19) est empêché d'être déplacé en entrant en contact avec le corps de prévention d'insertion et de retrait (14) par rapport à une activation dans la direction de la position ON de la poignée de commande (18) lorsque la poignée de commande (18) est en position OFF et que le corps de prévention d'insertion et de retrait (14) ouvre l'ouverture d'insertion de la poignée d'insertion et de retrait (13).

3. Centre de contrôle selon la revendication 1,
dans lequel le corps de blocage de passage (19) est libéré du blocage de mouvement par le corps de prévention d'insertion et de retrait (14) lorsque la poignée de commande (18) est en position OFF et que le corps de prévention d'insertion et de retrait (14) est placé dans une position où la poignée d'insertion et de retrait est empêchée d'être insérée.

4. Centre de contrôle selon la revendication 1,
dans lequel le corps de blocage de passage (19) est libéré du blocage de mouvement par le corps de prévention d'insertion et de retrait (14) lorsque la poignée de commande (18) est en position ON et que le corps de prévention d'insertion et de retrait (14) est placé dans une position où la poignée d'insertion et de retrait est empêchée d'être insérée ; et le corps de prévention de retrait (14) peut être déplacé en réponse à l'activation vers la position OFF de la poignée de commande (18).
